# EUROPÄISCHE PATENTSCHRIFT

(11) **EP 0 746 219 B1**
(45) Veröffentlichungstag und Bekanntmachung des Hinweises auf die Patenterteilung: **04.11.1998**
(21) Anmeldenummer: 95909753.6
(22) Anmeldetag: 21.02.1995
(51) Int. Cl.: A47C 7/46, B60N 2/44

(54) **RÜCKENLEHNE MIT VERSTELLBARER LORDOSENSTÜTZE FÜR SITZE**
SEATBACK WITH ADJUSTABLE LORDOSIS SUPPORT FOR SEATS
DOSSIER POUR SIEGES DOTE D'UN ELEMENT DE SOUTIEN POUR LORDOSE

(30) Priorität: 21.02.1994 DE 4405495
(43) Veröffentlichungstag der Anmeldung: 11.12.1996
(73) Patentinhaber: SCHUSTER, Wilhelm, Sen., A-4030 Linz (AT)
(72) Erfinder: SCHUSTER, Wilhelm, Sen., A-4020 Linz (AT); KLINGLER, Knud, D-90491 Nürnberg (DE)
(74) Vertreter: Zellentin, Rüdiger
(86) Internationale Anmeldenummer: EP9500618
(87) Internationale Veröffentlichungsnummer: WO9522270

(56) Entgegenhaltungen:
- EP-A- 0 011 396
- DE-A- 2 346 125
- US-A- 4 182 533

## Beschreibung

Die Erfindung betrifft eine Rückenlehne für Sitze aller Art, insbesondere für Autositze, Bürostühle und Sessel mit einem im wesentlichen flächigen Stützteil und einer verstellbaren Lordosenstütze , wobei der flächige Stützteil mindestens im Bereich der Anordnungsstelle der Lordosenstütze als wannenartige Ausbuchtung gestaltet ist, die Vorsprünge als Halterungen und/oder Führungen zur Befestigung und Führung der Lordosenstütze aufweist.

Aus der EP-A1-0 011 396, der US-A-4 182 533 und der DE-A-23 46 125 sind Rückenlehnen für Sitze gemäß dem Oberbegriff des Anspruchs 1 bekannt.

Hierbei ist jeweils der flächige Stützteil großformatig und damit bei der Montage der verstellbaren Lordosenstütze schwer handhabbar.

Aufgabe der Erfindung ist es, die Rückenlehne eines Sitzes mit einem flächigen Stützteil und mit verstellbarer Lordosenstütze so zu gestalten, daß die Herstellung und die Montage vereinfacht wird.

Diese Aufgabe wird durch eine Rückenlehne mit den Merkmalen des Anspruchs 1 gelost.

Vorteilhafte Ausgestaltungen der Erfindung sind den Unteransprüchen zu entnehmen.

Nachstehend wird die Erfindung anhand von Ausführungsbeispielen unter Bezug auf Zeichnungen näher erläutert. Es zeigt:
- Fig. 1: ein Stützteil für eine Rückenlehne in Form einer Rinne, der an einem Rahmen angeordnet ist und eine höhen- und wölbungsverstellbare Lordosenstütze aufweist;
- Fig. 2: das gleiche wie in Fig. 1 im Längsschnitt;
- Fig. 3: das gleiche wie in Fig. 1 im Querschnitt;
- Fig. 4: einen Stützteil für eine Rückenlehne, der in eine Schale mit Ausbuchtung integriert ist;
- Fig. 5: das gleiche wie in Fig. 3 im Längsschnitt;
- Fig. 6: das gleiche wie in Fig. 3 im Querschnitt;
- Fig. 7: einen Stützteil für eine Rückenlehne mit einer Aussparung, in der ein separater Formteil mit Ausbuchtung angeordnet ist;
- Fig. 8: einen Schnitt gemäß Linie VIII - VIII in Fig. 7;
- Fig. 9: einen Schnitt gemäß Linie IX - IX in Fig. 7;

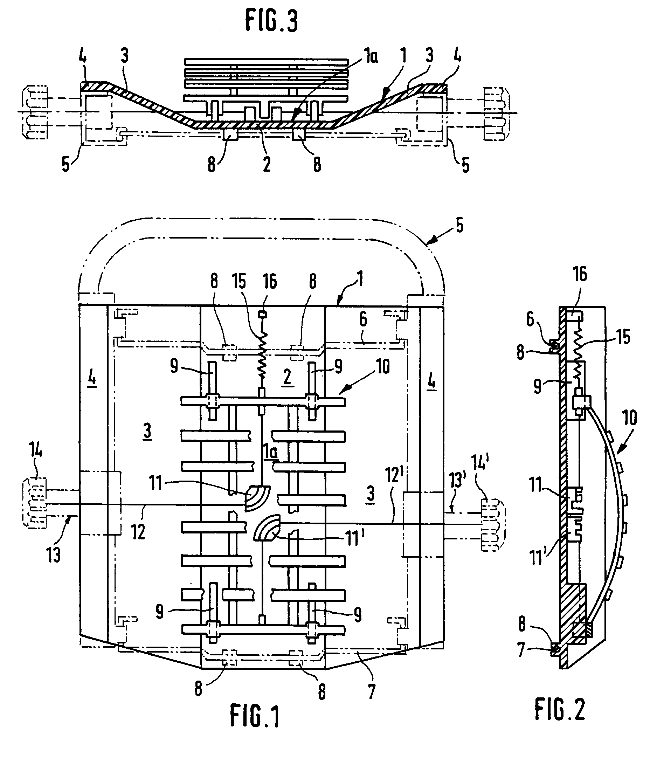

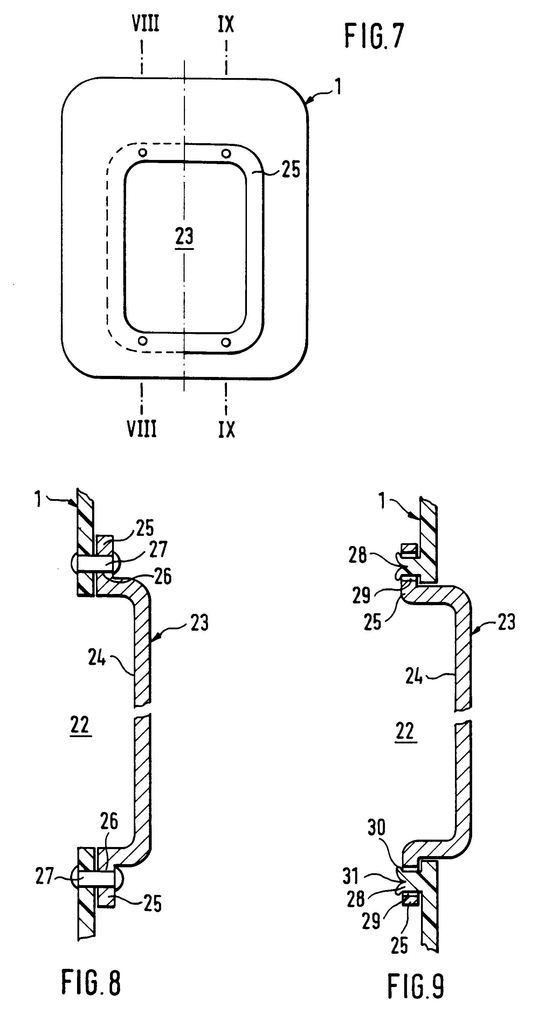

In den Fig. 7 bis 9 sind Ausführungsbeispiele gemäß den Ansprüchen dargestellt, wohingegen die in den Fig. 1 bis 6 dargestellten Ausführungsbeispiele nur einzelne Merkmale der Ansprüche zeigen.

Das in Fig. 1 bis 3 gezeigte Ausführungsbeispiel einer Rückenlehne weist einen Stützteil 1 in Form einer Rinne 1a mit zentraler Platte 2 und mit abgewinkelten Seitenteilen 3 auf, wobei sich deren freie abgewinkelte Kanten 4 auf seitlichen Holmen eines Rahmens 5 einer Rückenlehne abstützen.

Der Stützteil 1 besteht aus einem im wesentlichen biegesteifen Material z. B. einem Kunststoff, während der Rahmen 5 vorzugsweise aus einem Metall besteht und U-förmig gestaltet sein kann.Der Stützteil 1 ist zusätzlich an - vorzugsweise metallenen - Querstreben 6 und 7 des Rahmens 5 mittels auf der Rückseite des Stützteils 1 angeordneter Befestigungselemente 8 befestigt. Im Ausführungsbeispiel weisen die Querstreben 6, 7 einen runden Querschnitt auf und die Befestigungselemente 8 (Fig. 2 und 3) auf der Rückseite des Stützteils 1 sind als Schnappverbindungen zur Aufnahme der Querstreben 6, 7 gestaltet. Durch derartige Schnappverbindungen kann der Stützteil 1 auf einfache und schnelle Weise ohne Verwendung eines Werkzeuges am Rahmen 5 befestigt werden.

In der zentralen Platte 2 sind oben und unten jeweils zwei Führungen 9 vorgesehen, auf denen das obere und das untere Ende einer Lordosenstütze 10 jeweils beweglich angeordnet sind. Die Führungen 9 sind vorzugsweise so gestaltet, daß die Lordosenstütze 10 in sie oder auf sie ohne Werkzeug einführbar bzw. aufsetzbar ist, vorzugsweise in Form von beliebig bekannten Gleit- und/oder Schnappverbindungen. Die Führungen 9 können beispielsweise als vorspringende Schienen oder als Ausnehmungen gestaltet sein und dienen dazu, die Enden der Lordosenstütze 10 darin bzw. darauf beweglich anzuordnen.

Die Platte 2 weist ferner zwei Umlenkelemente 11 und 11' auf. Um die Umlenkelemente 11 bzw. 11' sind um etwa 90° umgelenkt Seilzüge 12 bzw. 12' zu Verstellvorrichtungen 13 bzw. 13' mit Drehknöpfen 14, 14' am Rahmen 5 geführt. Die Seilzüge 12, 12' sind mit ihren anderen Enden am oberen bzw. unteren Ende der Lordosenstütze 10 befestigt.

Im Ausführungsbeispiel ist am oberen Ende der Lordosenstütze 10 eine Zugfeder 15 eingehängt, die mit ihrem anderen Ende in eine Halterung 16 eingehängt ist. Durch Drehen des Drehknopfes 14 der Verstellvorrichtung 13 unter Mithilfe der Zugfeder 15 wird der Seilzug 12 verlängert bzw. verkürzt, wodurch die Lordosenstütze 10 höhenverstellbar ist. Durch Drehen des Drehknopfes 14' der Verstellvorrichtung 13' kann der Seilzug 12' verkürzt bzw. verlängert werden, wodurch die biegeelastische Lordosenstütze 10 stärker gewölbt oder entspannt d. h. flacher wird. Durch die Verwendung der Umlenkelemente 11, 11' entfällt die Notwendigkeit eines Bowdenzugmantels zur Verstellung der Lordosenstütze 10, was die Herstellungskosten verbilligt, da lediglich ein Seilzug 12, 12' je Verstellvorrichtung 13, 13' benötigt wird; schließlich wird auch die Montage durch einfaches Aufsetzen des spannungsfrei eingehängten Seilzugs auf die Umlenkelemente 11, 11' erleichtert.

Auf der Platte 2 können anstelle von zwei Führungen 9 oben oder unten zwei Halterungen (nicht dargestellt) zur ortsfesten Aufnahme des einen Endes der Lordosenstütze 10 ausgeführt sein. In diesem Fall wäre dann die Lordosenstütze 10 nur wölbbar, nicht jedoch höhenverstellbar.

Vorzugsweise ist die Platte 2 mit den Befestigungselementen 8 und den Führungen 9, gegebenenfalls auch mit den Halterungen, und gegebenenfalls den Umlenkelementen (11, 11') einstückig in einer Spritzgußform aus Kunststoff hergestellt, was die Herstellungskosten auf ein Minimum reduziert. Um eine breite Anpassung an verschieden geformte Querstreben 6, 7 und deren Anordnung in unterschiedlichen Abständen zu gewährleisten, können nach einer nicht dargestellten Variante die Befestigungselemente 8 separat hergestellt werden und in waagerechte und/oder senkrechte Schlitze in der Platte 2 einsteckbar sein (nicht dargestellt).

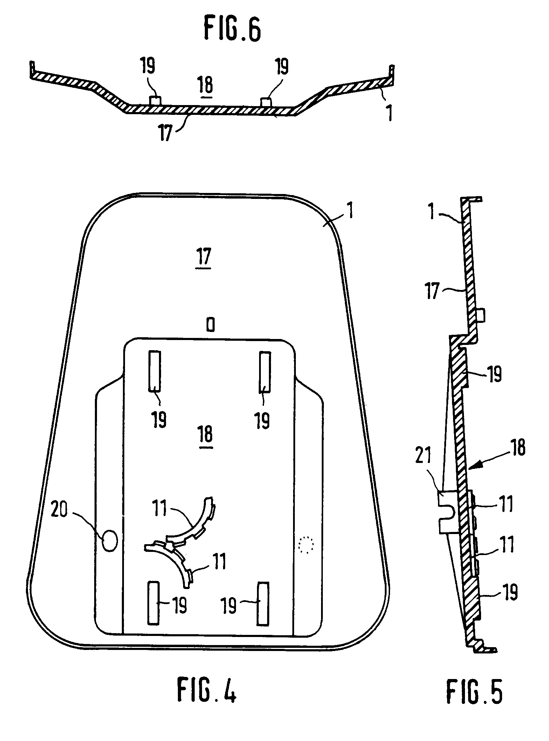

Bei dem in Fig. 4 bis 6 dargestellten Ausführungsbeispiel einer Rückenlehne, wie sie insbesondere für Bürostühle bekannt ist, ist der flächige Stützteil 1 als Schale 17 gestaltet. Die Schale 17 weist eine wannenartige Ausbuchtung 18 in Form einer etwa rechteckigen Vertiefung zur Aufnahme einer nicht dargestellten Lordosenstütze auf. In der Ausbuchtung 18 sind Vorsprünge 19 angeordnet, die als Halterungen und/oder Führungen zur Befestigung und Führung einer Lordosenstütze dienen, wie dies bei der Beschreibung von Fig. 1 bis 3 dargestellt wurde.

In der Ausbuchtung 16 kann ein Umlenkelement 11 oder es können auch zwei, dann in etwa spiegelbildlich zueinander angeordnete, Umlenkelemente 11 vorgesehen sein, die zur Umlenkung von einem oder zwei am oberen und/oder am unteren Ende der Lordosenstütze befestigten Seilzügen dienen können. Diese Ausführungsform des Stützteils 1 ist vorzugsweise aus einem Kunststoff in einem einzigen Teil hergestellt und weist an einer oder erforderlichenfalls an beiden Seiten der seitlichen Begrenzung der vertieften Ausbuchtung 18 ein Durchgangsloch 20 für den Seilzug zu einer (nicht dargestellten) Verstellvorrichtung auf. Die Schale 17 kann an ihrer Rückseite nicht weiter beschriebene Elemente 21 aufweisen, die zur Befestigung der Lehne an einem Sitz dienen.

Bei dem in Fig. 7 dargestellten Ausführungsbeispiel kann der flächige Stützteil 1 eine beliebige, dem jeweiligen Verwendungszweck angepasste, Kontur bzw. auch räumliche Form aufweisen. Der Stützteil 1 weist im Bereich der Anordnungsstelle der Lordosenstütze (nicht gezeigt) eine offene Aussparung 22 auf. Über der Aussparung 22 ist ein separater Formteil 23 anordenbar, der eine wannenartige gestaltete Ausbuchtung 24 mit einem flanschartigen Rand 25 aufweist. Der Formteil 23 weist die Führungen und Halterungen sowie die Umlenkelemente auf, wie sie bei den vorher geschilderten Ausführungen beschrieben sind. Er ist zur Aufnahme einer verstellbaren Lordosenstütze ausgestaltet bzw. angepaßt. Mit dem Rand 25 ist der Formteil 23 über der Aussparung 22, diese vollständig oder auch teilweise überdeckend, befestigbar, wobei er zur Befestigung auf oder unterhalb des Stützteils 1 dient.

Die Befestigung des Formteils 23 am Stützteil 1 kann auf verschiedene Weise vorgenommen werden. Gemäß Fig. 8 weisen der Stützteil 1 als auch der Rand 25 des Formteils 23 in Deckung bringbare durchgehende Bohrungen 26 auf, wobei zur Erleichterung der Montage die Bohrungen 26 eines der Teile als Langlöcher, wobei sie dann um 90°C versetzt angeordnet sind, ausgestaltet sein können. Durch diese Bohrungen 26 wird das Stützteil 1 mit dem Formteil 23 beispielsweise durch Nieten 27 oder Schraubverbindungen dauerhaft fest oder lösbar miteinander verbunden. Im Falle, daß der Formteil 23 auf dem Stützteil 1 befestigt wird(s. Fig. 9), wobei sich seine Ausbuchtung 24 durch die Aussparung 22 hindurch erstreckt, können auf dem Stützteil 1 Vorsprünge 28 angeordnet sein, die in ihrer Anordnung runden Löchern oder auch Langlöchern 29 im Rand 25 des Formteils 23 entsprechen. Diese Vorsprünge 28 können einen spreizbaren Kopf 30 aufweisen, z. B. mit einem Schlitz 31, der beim Einführen durch ein Loch, bzw. Langloch 29 ausweichen kann und sich in der Endposition - eine Verriegelung des Formteils 23 am Stützteil 1 erreichend - wieder spreizt. Diese Ausführung ist konstruktiv einfach und sowohl die Vorsprünge 28 mit den spreizbaren Köpfen 30 als auch die Löcher 29 können mit den jeweiligen Einzelteilen ohne zusätzliche Maßnahmen im Spritzgußverfahren bei Verwendung von Kunststoff hergestellt werden. Selbstverständlich können die Vorsprünge 28 auch im Formteil 23 und die Löcher 29 im Stützteil 1 angeordnet sein. Die Köpfe 30 der Vorsprünge können auch zur Verbindung der beiden Teile angeschmolzen werden. Es ist auch möglich, den Stützteil 1 mit dem Formteil 23 durch eine beliebige Kleb-, Rast-, Schnapp- oder Einhängverbindung aneinander zu befestigen.

Die Ausbuchtungen sind vorzugsweise rechteckig gestaltet, da sie zur Aufnahme der meist entsprechende Abmessungen aufweisenden Lordosenstütze dienen. Aus fertigungstechnischen Gründen können die Seitenkanten der Ausbuchtungen abgeschrägt und die Ecken gerundet sein. Aus optischen Gründen können die Ausbuchtungen auch andere Umrisse zum Beispiel runde, ovale oder auch vieleckige aufweisen.

Vorzugsweise sind die Stützteile in jeder Gestalt aus einem Kunststoff gespritzt oder gepreßt, wobei auch Verstärkungseinlagen verwendet werden können. Es ist jedoch die Verwendung eines beliebigen Materials, z. B. eines formbaren oder eines Schichtmaterials möglich.

## Patentansprüche

1. Rückenlehne für Sitze aller Art, insbesondere für Autositze, Bürostühle und Sessel mit einem im wesentlichen flächigen Stützteil (1) und einer verstellbaren Lordosenstütze, wobei der flächige Stützteil (1) mindestens im Bereich der Anordnungsstelle der Lordosenstütze als wannenartige Ausbuchtung (18, 24) gestaltet ist, die Vorsprünge als Halterungen und/oder Führungen (9, 19) zur Befestigung und Führung der Lordosenstütze aufweist,
**dadurch gekennzeichnet,**
daß die wannenartige Ausbuchtung (24) in einem über einer Aussparung (22) im Stützteil (1) angeordneten separaten Formteil (23) ausgeführt ist.

2. Rückenlehne nach Anspruch 1,
**dadurch gekennzeichnet,**
daß der separate Formteil (23) über der Aussparung (22) mittels Befestigungselementen werkzeugfrei am Stützteil (1) befestigt ist.

3. Rückenlehne nach einem der Ansprüche 1 oder 2,
**dadurch gekennzeichnet,**
daß die Führungen (9, 19) Gleit- und/oder Schnappverbindungen sind.

4. Rückenlehne nach einem der Ansprüche 1 bis 3,
**dadurch gekennzeichnet,**
daß in der wannenartigen Ausbuchtung (18, 24) mindestens ein Umlenkelement (11, 11') für einen Seilzug (12, 12')zur Verstellung der Lordosenstütze angeordnet ist.

5. Rückenlehne nach Anspruch 4,
**dadurch gekennzeichnet,**
daß zwei in etwa spiegelbildlich angeordnete Umlenkelemente (11, 11') vorgesehen sind.

6. Rückenlehne nach einem der Ansprüche 1 bis 5,
**dadurch gekennzeichnet,**
daß der flächige Stützteil (1), auch in Form einer Rinne (1a), an seiner Rückseite Befestigungselemente (21) zur Befestigung der Lehne an einem Sitz aufweist.

## Claims

1. Back rest for seats of all kinds, in particular for car seats, office chairs and armchairs with an essentially flat support element (1) and an adjustable lower back support, in which the flat support element (1) is designed, at least in the region where the lower back support is arranged, as a bath-like groove (18, 24) which comprises projections as mounts and/or guides (9,19) for securing and guiding the lower back support, characterised in that the bath-like groove (24) is formed in a separate moulded part (23) arranged via a recess (22) in the support element (1).

2. Back rest according to claim 1, characterised in that the separate moulded part (23) is secured to the support element (1) via the recess (22) by means of fastening elements without using tools.

3. Back rest according to one of claims 1 or 2, characterised in that the guides (9, 19) are slide and/or snap connections.

4. Back rest according to one of claims 1 to 3, characterised in that in the bath-like groove (18, 24) at least one reversing element (11, 11') for a cable control (12, 12') is arranged for adjusting the lower back rest.

5. Back rest according to claim 4, characterised in that two reversing elements (11, 11') are provided arranged to almost mirror one another.

6. Back rest according to one of claims 1 to 5, characterised in that the flat support element (1), also in the form of a channel (1a), on its rear side has fastening elements (21) for securing the back rest onto a seat.

## Revendications

1. Dossier pour sièges de tous modèles, en particulier pour sièges d'automobiles, sièges de bureaux et fauteuils, comprenant une partie de soutien (1) sensiblement plane et un soutien lombaire réglable, dans lequel la partie de soutien plane (1) est pourvue d'un creux (18, 24) en forme de cuvette au moins dans la région de l'emplacement de montage du soutien lombaire, ledit creux comportant des saillies servant de montures et/ou de guidages (9, 19) pour la fixation et le guidage du soutien lombaire, caractérisé en ce que le creux en forme de cuvette (24) est réalisé dans une partie moulée (23) agencée séparément dans un évidement (22) dans la partie de soutien (1).

2. Dossier selon la revendication 1, caractérisé en ce que la pièce moulée séparée (23) est fixée par intermédiaire de l'évidement (22) sur la partie de soutien (1) au moyen d'éléments de fixation sans utilisation d'outils.

3. Dossier selon l'une ou l'autre des revendications 1 et 2, caractérisé en ce que les guidages (9, 19) sont des liaisons à coulissement et/ou à encliquetage.

4. Dossier selon l'une des revendications 1 à 3, caractérisé en ce que dans le creux en forme de cuvette (18, 24) est agencé au moins un élément de renvoi (11, 11') pour un mécanisme à câble (12, 12') destiné à régler le soutien lombaire.

5. Dossier selon la revendication 4, caractérisé en ce qu'il est prévu deux éléments de renvoi (11, 11') agencés approximativement symétriquement.

6. Dossier selon l'une des revendications 1 à 5, caractérisé en ce que la partie de soutien plane (1), également sous la forme d'une goulotte (1a), comporte sur sa face postérieure des éléments de fixation (21) en vue de la fixation du dossier sur un siège.
